# EUROPÄISCHE PATENTSCHRIFT

(11) **EP 2 818 454 B1**
(45) Veröffentlichungstag und Bekanntmachung des Hinweises auf die Patenterteilung: **08.08.2018**
(21) Anmeldenummer: 14173049.9
(22) Anmeldetag: 18.06.2014
(51) Int. Cl.: C03B 23/11

(54) **Glasbearbeitungsvorrichtung und Bodenmaschine hierfür zum Herstellen von Glasbehältern**
Glass processing device and floor-standing machine for producing glass containers
Dispositif de traitement du verre et machine fixée au plancher associée destinée à la fabrication de récipients en verre

(30) Priorität: 25.06.2013 DE 102013212150
(43) Veröffentlichungstag der Anmeldung: 31.12.2014
(73) Patentinhaber: Schott AG, 55122 Mainz (DE)
(72) Erfinder: Frost, Robert, 9034 Eggersriet (CH); Moseler, Doris, 55257 Budenheim (DE); Lange, Ulrich, 55122 Mainz (DE); Markovic, Boban, 9000 St. Gallen (CH); Rupertus, Volker, 55232 Alzey (DE); Hladik, Bernhard, 55239 Gau-Odernheim (DE)
(74) Vertreter: Westphal, Mussgnug & Partner Patentanwälte mbB

(56) Entgegenhaltungen:
- DE-A1- 10 332 176
- FR-A- 1 004 160
- GB-A- 527 692
- GB-A- 736 391
- US-A- 2 199 332

## Beschreibung

Die vorliegende Erfindung betrifft eine Bodenmaschine für eine Glasbearbeitungsvorrichtung zum Herstellen von Glasbehältern aus einem Rohrglas, umfassend eine oder mehrere Halteeinheiten zum Halten des Rohrglases bzw. des Glasbehälters, wobei die Halteeinheiten um die eigene Achse und um eine Drehachse der Bodenmaschine drehbar gelagert sind, um das Rohrglas zu verschiedenen Bearbeitungspositionen zu führen, eine Druckquelle zum Bereitstellen eines Gasstroms, und ein mit der Druckquelle kommunizierendes Kanalsystem zum Führen des Gasstroms zu den Halteeinheiten und zum Einleiten des Gasstroms in das Rohrglas bzw. den Glasbehälter. Ferner betrifft die Erfindung eine Glasbearbeitungsvorrichtung sowie ein Verfahren zum Herstellen von Glasbehältern.

Glasbehälter, die mit den gattungsgemäßen Glasbearbeitungsvorrichtungen hergestellt werden, weisen einen zylindrischen Abschnitt oder konischen Abschnitt auf. Insbesondere werden die Glasbehälter als Spritzen und Fläschchen mit den gattungsgemäßen Glasbearbeitungsvorrichtungen hergestellt, wobei die Spritzen und Fläschchen hauptsächlich zur Lagerung und Verabreichung von pharmazeutischen Produkten wie Medikamenten verwendet werden.

Die US 1 700 326 A, die US 2 193 376 und die EP 0 293 661 A1 zeigen Vorrichtungen, bei denen Glasbehälter mittels eines Blasverfahrens aus einer Glasschmelze gewonnen werden. Hierbei wird aus der Glasschmelze ein bestimmtes Volumen in eine Form eingebracht, wobei das Glas eine sehr hohe Temperatur aufweist (ca. 1600°C). Dann wird ein Hohlraum erzeugt, beispielsweise durch Einführen eines Dorns in die Glasschmelze. Anschließend wird mit Druckluft (mehrere bar) in den Hohlraum eingeblasen, so dass das Glas an die Wände der Form gepresst und folglich geformt wird. Um den so entstandenen Glasbehälter aus der Form zu entnehmen, muss die Form zu öffnen sein. Üblicherweise sind zwei Formteile vorhanden, die geöffnet werden können. Damit der Glasbehälter aber beim Öffnen nicht verformt wird, muss er zumindest an der Kontaktfläche zwischen Glas und Form auf eine Temperatur gekühlt werden, die dem Glasbehälter eine gewisse Formstabilität gibt (ca. 600°C). Daher muss die Form kühlbar sein, was auch durch die Druckluft geschehen kann. Zudem muss der Glasbehälter beispielsweise mit einer Zange aus der Form zu entnehmen sein, so dass eine gewisse Formstabilität vorhanden sein muss, bevor der Glasbehälter aus der Form entnommen werden kann. Generell eignen sich zwar auch Glasbehälter, die mit einem Blasverfahren hergestellt sind, zur Lagerung von pharmazeutischen Produkten. Allerdings weisen die beim Blasverfahren entstehenden Glasbehälter eine sehr stark variierende Wandstärke auf. Aufgrund der hieraus resultierenden optischen Verzerrungen ist eine automatisierte Produktkontrolle nur sehr eingeschränkt möglich.

Die DE 103 41 300 B3 zeigt eine gattungsgemäße Glasbearbeitungsvorrichtung zum Herstellen von Glasbehältern aus einem Rohrglas, allerdings kann hier keine Luft oder ein anderes Gas in das Rohrglas eingeleitet werden.

Glasbearbeitungsvorrichtungen der eingangs genannten Art weisen eine Muttermaschine und eine Bodenmaschine auf, die beide drehbar sind und eine Anzahl von Halteeinheiten aufweisen, die beispielsweise ein Einspannfutter umfassen. Üblicherweise ist die Bodenmaschine unterhalb der Muttermaschine angeordnet. In das Einspannfutter der Muttermaschine wird ein Rohrglas von ca. 1,5 m Länge eingespannt, wobei das Rohrglas um eine bestimmte Länge nach unten über das Einspannfutter übersteht. Am nach unten überstehenden offenen Ende wird das Rohrglas bestimmten Bearbeitungsvorgängen unterzogen, die an unterschiedlichen Bearbeitungspositionen durchgeführt werden. Hierzu werden die Muttermaschine und mit ihr die Einspannfutter um einen bestimmten Winkel von einer Bearbeitungsposition zur nächsten gedreht. Ist das nach unten überstehende Ende des Rohrglases fertig bearbeitet, so dass es beispielsweise einen Rollrand oder ein Gewinde aufweist, so muss ein Teil des Rohrglases abgetrennt werden. An der Bearbeitungsposition, an welcher der Trennschritt vorgenommen wird, wird das betreffende Einspannfutter der Muttermaschine axial fluchtend mit einem Einspannfutter einer Halteeinheit der Bodenmaschine angeordnet. Die Halteeinheit der Bodenmaschine ist axial bewegbar und ergreift das Rohrglas etwas oberhalb des nach unten überstehenden Endes des Rohrglases. Im Bereich zwischen dem Einspannfutter der Muttermaschine und dem Einspannfutter der Bodenmaschine wird üblicherweise ein Gasbrenner zum Erhitzen auf das Rohrglas gerichtet, wobei das Rohrglas auch auf andere Weisen erhitzt werden kann. Dabei ist der Gasbrenner in seiner Position festgelegt. Um eine möglichst rotationssymmetrische Erwärmung des Rohrglases zu erreichen, sind die Halteeinheiten um die eigene Achse drehbar. Durch das Drehen des Rohrglases wird es nicht nur an einer Stelle vom Gasbrenner erwärmt, sondern gleichmäßig über den Umfang verteilt. Das Rohrglas wird solange erhitzt, bis dass es so viskos ist, dass der Teil, der im Einspannfutter der Bodenmaschine eingespannt ist, durch Herunterfahren des Einspannfutters der Bodenmaschine vom übrigen Teil des Rohrglases getrennt werden kann. Dabei verjüngt sich der erwärmte Teil des Rohrglases und schnürt sich soweit ein, dass an der Trennstelle jeweils ein geschlossener Boden entsteht, einer am abgezogenen Teil, der sich im Einspannfutter der Bodenmaschine befindet und einer am im Einspannfutter der Muttermaschine verbliebenen Teils des Rohrglases.

Im Folgenden wird der Teil betrachtet, der sich im Einspannfutter der Bodenmaschine befindet. Wie bereits ausgeführt, ist das freie offene Ende bereits fertig bearbeitet, allerdings ist der Boden des nun entstandenen Glasbehälters noch nicht in der gewünschten Form. Der Boden des Glasbehälters befindet sich in diesem Bearbeitungszustand bezogen auf die Wirkrichtung der Schwerkraft oberhalb des offenen Endes, was folgende Dinge mit sich zieht: Wie oben beschrieben, ist der Boden durch einen thermischen Trennschritt erzeugt worden, so dass die Viskosität des Glases im Bodenbereich noch so hoch ist, dass der Boden je nach Durchmesser des verwendeten Rohrglases mehr oder weniger stark nach unten durchhängt. Zudem weist der Boden eine sich radial ändernde Wandstärke auf. Um den Boden des Glasbehälters mit den gewünschten Eigenschaften ausstatten zu können, muss er noch weiteren, hauptsächlich thermischen Bearbeitungsschritten unterzogen werden. Um dem Durchhängen des Bodens entgegenzuwirken, wird über das offene Ende des Glasbehälters ein Gas, üblicherweise Luft, in den Glasbehälter eingeblasen, wodurch ein Staudruck entsteht, der den Boden stützt. Je nachdem, welche Bearbeitungsschritte noch vorgenommen werden sollen, wird so viel Gas eingeblasen, dass sich der Boden nach oben auswölbt, wodurch die Zugänglichkeit des Bodens für Bearbeitungswerkzeuge wie Gasbrenner erhöht wird. Schließlich wird der Glasbehälter auf die gewünschte Länge gebracht, was dadurch geschieht, dass der Boden gegen eine Bodenmatrize gedrückt wird. Hierzu wird ein Gasstroms in den Glasbehälter eingeleitet, wodurch sich beim Auftreffen auf den Boden ein Staudruck ausbildet, der den Boden gegen die Bodenmatrize drückt. Da der Glasbehälter aber geöffnet ist, bildet sich im Glasbehälter kein nennenswerter statischer Überdruck aus. Sowohl der statische Überdruck als auch der Staudruck betragen nicht mehr als 1 mbar.

Die GB 527 692 A und die GB 736 391 A zeigen Glasbearbeitungsvorrichtungen, bei denen der sich aus dem Rohrglas bildende Boden mittels eines Luftstoßes in die Form einer Halbkugel überführt werden soll.

Das Einblasen eines Gasstroms hat noch einen weiteren Aspekt. Für die Lagerung von pharmazeutischen Produkten werden bevorzugt Borosilikatgläser verwendet, da sie eine hohe Hydrolysebeständigkeit bei vergleichsweise geringen Kosten bieten. Zum Senken des Schmelzpunktes enthalten Borosilkatgläser auch Natrium. Na-Ionen sind aber im Glas nicht valent gebunden, sondern vagabundieren durch die Glasmatrix, welche hauptsächlich vom SiO₂ bestimmt wird. Wird das Rohrglas zum Trennen erhitzt, sind Temperaturen von über 1200°C notwendig, was deutlich über der Verdampfungstemperatur von Natrium liegt. Folglich verdampfen große Mengen von Na vom Boden weg und setzen sich an verschiedenen Stellen in der Flasche wieder ab. Das Ausdampfen von Natrium hat auch den Effekt, dass Bor in Form von Boraten mitgeschleppt wird und auch ausdampft, auch wenn die Borate im Vergleich zu Natrium deutlich fester in der Glasmatrix eingebunden sind.

Der Glasbehälter wird am Boden sehr stark thermisch behandelt, während am zylindrischen Abschnitt keine Wärmebehandlung stattfindet. Infolgedessen entstehen im Glasbehälter starke Thermospannungen, die dazu führen, dass der Glasbehälter nach dem Abkühlen zerspringen kann. Um dies zu verhindern, muss eine weitere thermische Behandlung vorgenommen werden, um die Spannungen abzubauen. Diese thermische Behandlung findet bei ca. 600°C statt, also deutlich unterhalb der Temperaturen, die für das Trennen des Glasbehälters vom Rohrglas notwendig sind. Hierbei verdampft ein Großteil des Natriumborats. Die nicht verdampften Teile brennen sich in die Wandung des Glasbehälters ein. Problematisch hieran ist, dass Na-Ionen in die Substanz, die in den Glasbehältern gelagert wird, migrieren können. Insbesondere bei pharmazeutischen Substanzen ist dies nicht erwünscht. Die Migrationsneigung hängt stark davon der in den Glasbehältern gelagerten Substanzen und deren pH-Wert ab. Durch das Einleiten des Gasstroms in den Glasbehälter bzw. in das Rohrglas wird auch ein Teil des Natriums während des Trennprozesses aus dem Glasbehälter entfernt, so dass sich weniger Natrium in die Wandung einbrennen kann. Die Neigung, dass Natrium in die in den Glasbehältern gelagerten Substanzen migrieren kann, wird in diesem Zusammenhang auch als Oberflächenalkalinität bezeichnet, die auch durch undefiniertes Einblasen von Gas verringert werden kann.

Das Einblasen der Luft in den Glasbehälter bzw. in das Rohrglas wird bei bekannten Glasbearbeitungsvorrichtungen wie folgt realisiert: Unterhalb Einspannfutters der Bodenmaschine verläuft ein Rohr parallel zur Drehachse der Bodenmaschine, wobei sich die Austrittsöffnung des Rohres unmittelbar unterhalb des offenen Endes des Rohrglases bzw. des Glasbehälters befindet. Entlang der Kreisbahn, welche die Einspannfutter der Bodenmaschine durchlaufen, ist ein entsprechend gebogenes Bodenrohr mit einem Schlitz oder einer Anzahl von Löchern angebracht, die an der oberen Oberfläche angeordnet sind. Die Eintrittsöffnung des parallel zur Drehachse der Bodenmaschine verlaufenden Rohres befindet sich in einem bestimmten Abstand oberhalb des Bodenrohres. Das Bodenrohr wird mit Gas, üblicherweise Luft, beaufschlagt, welches den Schlitz oder die Löcher verlässt und in die jeweilige Eintrittsöffnung eintritt. Wie eingangs erwähnt, können die Halteeinheiten bzw. die Einspannfutter zum gleichmäßigen Erwärmen des Rohrglases bzw. des Glasbehälters gedreht werden. Das parallel zur Drehachse der Bodenmaschine verlaufende Rohr dreht dabei mit.

Die Löcher sind nach oben hin ungeschützt, so dass sie sich durch Glassplitter, Öl und andere Partikel, die sich in der rauen Umgebung der Glasbearbeitungsmaschine befinden, schnell zusetzen können. Folglich verändern sich die Strömungsverhältnisse im Bereich zwischen dem Bodenrohr und der Eintrittsöffnung, so dass es nahezu unmöglich wird, einen reproduzierbaren Gasstrom von der Druckquelle in den Glasbehälter bzw. in das Rohrglas zu leiten. Man weiß nie, welcher Volumenstrom tatsächlich in den Glasbehälter bzw. in das Rohrglas gelangt. An dieser Stelle sei darauf hingewiesen, dass es vom Fortschritt der Bearbeitung abhängt, ob das Gas noch in das Rohrglas oder in den bereits vorhandenen Glasbehälter mit geschlossenem Boden eingeleitet wird. Das Einblasen wird hiervon unabhängig durchgeführt.

Nicht nur Natriumborate, sondern allgemein Alkaliborate haben noch eine weitere nachteilige Eigenschaft. Die Verdampfungsrate der Alkaliborate steigt mit zunehmender Temperatur exponentiell an. Beim Bearbeiten des Bodens des Glasbehälters verdampft Natriumborat aus dem Bodenbereich und schlägt sich in einer Kondensationszone auf der Wandung des Glasbehälters nieder. In der Kondensationszone ist das Glas schon relativ kalt. Zwischen dem Boden und der Kondensationszone bildet sich aber auch eine Eindiffusionszone aus, in welcher mehr Natriumborat in das Glas hineindiffundiert als verdampft. Folglich ergeben sich eine Anreicherung von Natriumborat in der Eindiffusionszone und eine Verarmung im Boden, wobei die Verarmung im Boden keine negativen Folgen hat. Die Anreicherung von Borat in der Eindiffusionszone hat jedoch folgende Auswirkungen:
Im oberflächennahen Bereich der Eindiffusionszone (ca. 30 bis 200 µm ausgehend von der inneren Oberfläche des Glasbehälters) bewirkt die Anreicherung von Bor, dass sich das hauptsächlich aus Si, Na und B bestehende Borosilikatglas nach der Abkühlung nicht mehr mischt, da man sich im Bereich einer Mischungslücke im ternären Phasendiagramm befindet. Folglich entstehen zwei Phasen mit unterschiedlicher Zusammensetzung, die zwangsläufig auch unterschiedliche chemische und physikalische Eigenschaften haben. Eine der zwei Phasen weist auch eine geringere Hydrolysebeständigkeit auf, so dass sie verstärkt angegriffen wird, wodurch Spannungen im oberflächennahen Bereich der Eindiffusionszone entstehen. Als Folge davon lösen sich partikelförmige Glasbestandteile von der Oberfläche ab, die eine deutlich geringere Erstreckung in einer Achse als in der Ebene senkrecht zu dieser Achse aufweisen. Diese Partikel gehen dann in die im Glasbehälter gelagerte Substanz über, was insbesondere dann besonders folgenreich ist, wenn die Substanz als Medizin verabreicht wird. Die Neigung des Ablösens dieser flächigen Partikel wird auch als Delaminationsneigung bezeichnet.

Bei bekannten Glasbearbeitungsvorrichtungen stellt der verantwortliche Maschinenführer die Größe des Gasstroms aufgrund seiner Erfahrung so ein, dass der Boden die gewünschten geometrischen Eigenschaften erhält und die für die Oberflächenalkalinität vorgeschriebenen Grenzwerte nicht überschritten werden. Ein anderer Maschinenführer kann dieselben geometrischen Eigenschaften des Bodens und die gewünschten Werte der Oberflächenalkalinität mit einer ganz anderen Größe des Gasstroms erreichen. Eine Reproduzierbarkeit ist nicht gegeben. Die Delaminationsneigung kann jedoch mit bekannten Glasbearbeitungsvorrichtungen nicht verlässlich in unkritische Bereiche gesenkt werden und stand lange Zeit nicht im Fokus der Hersteller von Glasbehältern für die oben genannten Zwecke.

Aufgabe der vorliegenden Erfindung ist es daher, eine Glasbearbeitungsvorrichtung und eine Bodenmaschine für dies Glasbearbeitungsvorrichtung der eingangs genannten Art derart weiterzuentwickeln, dass die Delaminationsneigung von Glasbehältern insbesondere aus Borosilikatglas deutlich reduziert werden kann. Ferner ist es Aufgabe der vorliegenden Erfindung, ein Verfahren zum Herstellen von Glasbehältern aus einem Rohrglas insbesondere aus Borosilikatglas anzugeben, mit dem die Delaminationsneigung der hierdurch hergestellten Glasbehälter deutlich reduziert werden kann.

Gelöst wird die Aufgabe durch eine Bodenmaschine nach Anspruch 1. Weitere vorteilhafte Ausgestaltungen der Bodenmaschine sind Gegenstand der Unteransprüche.

Wie oben erwähnt, weisen Kanalsysteme herkömmlicher Bodenmaschinen ein Bodenrohr und ein senkrecht hierzu verlaufendes Rohr auf. Aufgrund der Fertigungsungenauigkeiten entsteht zwischen dem Bodenrohr und dem senkrecht verlaufenden Rohr zwangsläufig ein Spalt, dessen Abmessungen sich beim Drehen der Bodenmaschine ändern. Ferner können sich Partikel und andere Fremdkörper im Spalt anlagern, was aufgrund der extremen Bedingungen, die bei der Glasherstellung in der Umgebung der Bodenmaschine herrschen, nicht unwahrscheinlich ist. Folglich kommt es im Spalt zu nicht voraussagbaren Verwirbelungen, Turbulenzen und Aufspaltungen des Gasstroms, so dass nur ein Teil des Gasstroms auch tatsächlich in das senkrecht verlaufende Rohr gelangt. Es kann daher keine reproduzierbare Aussage darüber getroffen werden, welcher Volumenstrom tatsächlich in den Glasbehälter bzw. in das Rohrglas eingeleitet wird. Aufgrund der erfindungsgemäßen Ausgestaltung des Kanalsystems der erfindungsgemäßen Bodenmaschine wird der Gasstrom störungs- und unterbrechungsfrei von der Druckquelle zu den Halteeinheiten und in das Rohrglas geleitet, so dass unabhängig von der Drehstellung der Bodenmaschine immer derselbe Volumenstrom bzw. dieselbe Masse des Gasstroms in das Rohrglas bzw. in den Glasbehälter eingeleitet wird. Es hat sich herausgestellt, dass sich die Delaminationsneigung dann verringern lässt, wenn der Gasstrom mit einer klar definierten, laminaren Strömung und einer bestimmten Strömungsgeschwindigkeit in das Rohrglas bzw. in den Glasbehälter während der verschiedenen Bearbeitungsschritte eingeleitet wird und auch definiert wieder austreten kann. Dies wird durch die erfindungsgemäße Ausgestaltung des Kanalsystems ermöglicht, was im Vergleich zu herkömmlichen Kanalsystemen nicht erreicht werden konnte. Erfindungsgemäß kann die Delaminationsneigung deutlich reduziert werden, ohne dass die anderen Funktionen des Gasstroms, nämlich das Anheben des viskosen Bodens und die Absenkung der Oberflächenalkalinität unterhalb bestimmter Grenzwerte verloren gingen oder weniger ausgeprägt wären.

Hierzu weist die erfindungsgemäße Bodenmaschine einen Rotor und einen Stator auf, wobei die Halteeinheiten auf dem Rotor angeordnet sind und das Kanalsystem eine erste Anzahl von auf einem Rotorabschnitt angeordneten Unterkanälen und eine zweite Anzahl von auf einem Statorabschnitt angeordneten Unterkanälen sowie einen Durchführungsabschnitt zum Führen des Gasstroms vom Statorabschnitt zum Rotorabschnitt aufweist. Dabei sind der Stator und der Rotor so ausgestaltet, dass sie im Durchführungsabschnitt eine Spaltdichtung zum Abdichten des Kanalsystems bilden oder das Spaltsystem spaltfrei ausgestaltet ist. Unter dem Durchführungsabschnitt soll der Abschnitt verstanden werden, in welchem das Kanalsystem vom Stator in den Rotor übergeht. Unter Statorabschnitt soll der Abschnitt des Kanalsystems verstanden werden, der im Betrieb der Bodenmaschine ortsfest ist. Dementsprechend soll unter Rotorabschnitt der Abschnitt des Kanalsystems verstanden werden, der im Betrieb rotiert. Folglich umfassen die Stator- und Rotorabschnitte auch Bereiche des Kanalsystems, die über den Stator und den Rotor als solche hinausgehen. Die Anzahl der auf dem Rotorabschnitt angeordneten Unterkanälen und der auf dem Statorabschnitt angeordneten Unterkanälen muss nicht gleich sein. Der Gasstrom kann in dieser Ausgestaltung nur dann zur Halteeinheit gelangen, wenn ein auf dem Rotorabschnitt angeordneter Unterkanal mit einem auf dem Statorabschnitt angeordneten Unterkanal im Durchführungsabschnitt überlappt oder fluchtet. Wie eingangs erwähnt, wird das Rohrglas bzw. der Glasbehälter durch Drehen des Rotors von einer zur nächsten Bearbeitungsposition transportiert. Die Zeit, die zum Transport von einer zur nächsten Bearbeitungsposition benötigt wird, ist üblicherweise deutlich kürzer als die Zeit, für welche das Rohrglas bzw. der Glasbehälter in einer Bearbeitungsposition verweilt. Es reicht daher aus, wenn der Gasstrom nur in der jeweiligen Bearbeitungsposition zur Halteeinheit strömen kann. Daher verlaufen die auf dem Rotor- und Statorabschnitt angeordneten Unterkanäle so, dass sie sich nur dann überlappen, wenn sich die jeweiligen Halteeinheiten und die darin eingespannten Rohrgläser oder Glasbehälter in den jeweiligen Bearbeitungspositionen oder in deren unmittelbarer Nähe befinden. Je nachdem, welcher Bearbeitungsschritt durchgeführt wird, wird kein Gasstrom mehr benötigt, insbesondere dann, wenn der Boden bereits fertig bearbeitet und seine Temperatur soweit abgekühlt ist, dass er sich ausreichend verfestigt hat und keine Unterstützung mehr benötigt. Folglich muss nicht in jeder Bearbeitungsposition einem Unterkanal des Rotorabschnitts auch ein Unterkanal auf dem Statorabschnitt zugeordnet sein.

Die Kombination aus einem Rotor und einem Stator hat eine Reihe von Vorteilen. Insbesondere ist es möglich, die Druckquelle und Teile des Kanalsystems wie Verteiler, Ventile etc. ortsfest anzuordnen, die dann Teil des Statorabschnitts des Kanalsystems werden. Hierdurch kann der konstruktive Aufwand verringert werden. Die Halteeinheiten werden auf dem Rotor angeordnet, um zu gewährleisten, dass das Rohrglas bzw. der Glasbehälter von einer Bearbeitungsstation zur nächsten transportiert werden kann. Insgesamt kann somit eine kompakte Bodenmaschine auf konstruktiv einfache Weise bereitgestellt werden. Insbesondere sind keine Drehdurchführungen für elektrische Kabel notwendig. Allerdings ergibt sich in dieser Ausgestaltung die Notwendigkeit, den Durchführungsabschnitt, der am stromabwärtigen Ende des Statorabschnitts und am stromaufwärtigen Ende des Rotorabschnitts angeordnet ist, so zu gestalten, dass trotz der im Durchführungsabschnitt stattfindenden Relativbewegung zwischen dem Rotor und dem Stator das Kanalsystem so zu gestalten, dass kein Spalt entsteht, welcher sich negativ auf den Gasstrom auswirken kann und somit die zielgerichtete Einleitung des Gasstroms in das Rohrglas bzw. in den Glasbehälter behindert. Hier gibt es jedoch bekannte Möglichkeiten, Gase von ruhenden in drehende Teile zu übertragen. Hier können Gleitringdichtungen oder Kolbenringe zum Einsatz kommen, um den Rotor gegenüber dem Stator abzudichten und so die unterbrechungsfreie Strömung des Gases von der Druckquelle zu den Halteeinheiten zu gewährleisten. Folglich können in dieser Ausgestaltung die Vorteile einer Rotor-Stator-Anordnung mit der erfindungsgemäßen Idee, einen definierten Gasstrom in das Rohrglas einzuleiten, kombiniert werden, so dass eine kompakte Bodenmaschine geschaffen wird, mit welcher die Delaminationsneigung der aus dem Rohrglas hergestellten Glasbehälter deutlich verringert werden kann.

Dadurch, dass der Stator und der Rotor so ausgestaltet sind, dass sie im Durchführungsabschnitt eine Spaltdichtung zum Abdichten des Kanalsystems bilden oder das Kanalsystem spaltfrei ausgestaltet ist, ergeben sich folgende Effekte: Im Gegensatz zu den oben beschriebenen Spalten bekannter Bodenmaschinen hat die Spaltdichtung - wie der Name schon sagt - eine dichtende Wirkung, da der Rotor und der Stator einen gewissen Maximalabstand, der unter anderem das verwendete Gas berücksichtigt, nicht überschreitet und der sich im Betrieb auch nicht wesentlich ändert. Zudem kann der Rotor und/oder der Stator mit einer bestimmten Oberflächengestaltung versehen werden, um die Dichtwirkung zu verstärken. Weiterhin ist die Spaltdichtung geschützt, so dass keine Partikel von außen eindringen können. Spaltdichtungen haben den Vorteil, dass keine Dichtkörper verwendet werden müssen, die aufgrund der Relativbewegung zwischen Rotor und Stator dem Verschleiß unterliegen. Folglich werden die Zuverlässigkeit und die Lebensdauer der Bodenmaschine gemäß dieser Ausgestaltung erhöht, ohne dass der Gasstrom beim Übergang vom Stator in den Rotor nennenswert gestört wird, so dass die Delaminationsneigung der Glasbehälter deutlich reduziert werden kann.

Bei der erfindungsgemäßen Bodenmaschine weist das Kanalsystem ein freies Ende auf, wobei die Halteeinheit relativ zum freien Ende drehbar ist. Wie eingangs erwähnt, ist das parallel zur Drehachse von bekannten Bodenmaschinen verlaufende Rohr zusammen mit der Halteeinheit drehbar. Es findet also keine relative Drehung des Rohrglases oder des Glasbehälters um das Rohr statt. Fluchtet das Rohr nicht mit der Drehachse des Rohrglases oder des Glasbehälters oder schließt das Rohr einen Winkel mit der Drehachse ein, so wird der Gasstrom nicht ideal in das Rohrglas bzw. in den Glasbehälter eingeleitet und es entsteht eine nicht rotationssymmetrische Strömung innerhalb des Rohrglases bzw. des Glasbehälters, was im ungünstigen Fall zu Toträumen oder Turbulenzen führen kann.

Wird das Rohrglas bzw. der Glasbehälter beim Einleiten des Gasstroms bei der erfindungsgemäßen Bodenmaschine um das freie Ende des Kanalsystems gedreht, so wird der Effekt, dass der Gasstrom nicht ideal eingeleitet wird, gleichmäßig verteilt, so dass wiederum eine rotationssymmetrische Strömung im Rohrglas oder im Glasbehälter entsteht. Auf diese Weise wird auch bei nicht ideal eingeleitetem Gasstrom die Delaminationsneigung spürbar verringert.

Vorzugsweise ist der Rotor radial außerhalb des Stators angeordnet. Der Stator ist somit axial zugänglich, so dass Anschlüsse, elektrische Kabel und andere Bestandteile des Statorabschnitts des Kanalsystems platzsparend und trotzdem gut zugänglich angeordnet werden können.

In einer vorteilhaften Ausgestaltung weisen einer oder mehrere der Unterkanäle im Durchführungsabschnitt eine in einer Ebene senkrecht zur Drehachse verlaufende Erweiterung auf. Wie bereits oben erläutert, kann nur dann der Gasstrom vom Statorabschnitt in den Rotorabschnitt und weiter zur betreffenden Halteeinheit strömen, wenn einer der auf dem Statorabschnitt angeordneten Unterkanäle mit einem der auf dem Rotorabschnitt angeordneten Unterkanälen überlappt, was typischerweise dann der Fall ist, wenn sich die Halteeinheit und das Rohrglas bzw. der Glasbehälter in einer der Bearbeitungspositionen oder in ihrer Nähe befinden. Mit der Erweiterung des Kanalsystems im Durchführungsabschnitt wird der Überlappungsbereich zwischen dem jeweiligen Unterkanal des Rotorabschnitts und dem jeweiligen Unterkanal des Statorabschnitts vergrößert, so dass die Zeit, für welche der Gasstrom unterbrochen ist, verringert wird. Wie eingangs erwähnt, dient der Gasstrom unter anderem auch der Unterstützung des Bodens des Glasbehälters, der aufgrund der thermischen Bearbeitung eine so geringe Viskosität aufweist, dass er in Wirkrichtung der Gewichtskraft durchhängt. Wird die Zeit, für welche der Gasstrom unterbrochen ist, verringert, wird der Boden für eine längere Zeit unterstützt, was sich positiv auf die Qualität des entstehenden Bodens auswirkt. Ferner bewirkt die Verkürzung der Zeit, für die der Gasstrom unterbrochen ist, auch eine Verringerung der Delaminationsneigung, da bei unterbrochener Gaszufuhr in den Glasbehälter die oben beschriebenen Eindiffusionsprozesse wieder stattfinden können. Je kürzer die Unterbrechung, desto kürzer auch die Eindiffusionsprozesse, was zu einer verringerten Delaminationsneigung führt.

Dabei schließt die Erweiterung in einer Ebene senkrecht zur Drehachse einen ersten Winkel ein, der so bemessen ist, dass die dichtende Wirkung der Spaltdichtung nicht verloren geht. Die Spaltdichtung kann nur dann den Gasstrom im Durchführungsabschnitt wirksam abdichten, wenn nicht nur das Spaltmaß eine maximale Größe nicht überschreitet, sondern der Spalt eine Mindestfläche überstreicht. Wird der erste Winkel der Erweiterung eines Rotor- oder Statorabschnitts zu groß gewählt, wird der Bereich zum benachbarten Unterkanal, in welchem die Spaltdichtung ihre Wirkung erzeugen kann, zu klein, so dass die Dichtwirkung der Spaltdichtung verloren gehen könnte.

Vorzugsweise weist das Kanalsystem eine Steuer- oder Regelungseinrichtung zum Steuern oder Regeln des durch das Kanalsystem strömenden Gasstroms auf. Hierdurch kann die Größe des Gasstroms so eingestellt werden, dass die gewünschte Wirkung auf den Glasbehälter reproduzierbar erzielt werden kann. Es können hierzu beispielsweise Massflow-Controller (MFC) zum Einsatz kommen, die selbst eine Messstrecke und ein Stellglied aufweisen und den Volumenstrom in den Glasbehälter regeln. Die Massflow-Controller sind üblicherweise mit der Maschinensteuerung verbunden, welche den Massflow-Controllern vorgibt, wann welcher Volumenstrom bereitgestellt werden soll. Es besteht weiterhin die Möglichkeit, nicht nur einen bestimmten Volumenstrom einzustellen, sondern ein Profil abzufahren, wenn der Gasstrom freigegeben ist. Beispielsweise kann es vorteilhaft sein, den Volumenstrom des Gasstroms langsam zu steigern. Die Steuer- oder Regelungseinrichtung kann sowohl auf dem Rotor als auch auf dem Stator angeordnet sein.

In einer besonders bevorzugten Ausgestaltung weist das Kanalsystem sechs auf dem Statorabschnitt angeordnete Unterkanäle sowie acht auf dem Rotorabschnitt angeordnete Unterkanäle und acht Halteeinheiten auf, wobei es üblich ist, maximal dieselbe Anzahl von Bearbeitungspositionen und Halteeinheiten vorzusehen, so dass die Bodenmaschine jeweils um ein Bogenmaß von 2π/8, also um 45° gedreht wird, um das Rohrglas oder den Glasbehälter von einer Bearbeitungsposition zur nächsten zu transportieren. Die Wahl von sechs Unterkanälen im Statorabschnitt hängt damit zusammen, dass es üblicherweise nur an sechs Bearbeitungspositionen sinnvoll ist, einen Gasstrom in das Rohrglas oder in den Glasbehälter einzuleiten. In den übrigen beiden Bearbeitungspositionen wird beispielsweise der Glasbehälter von Außen gekühlt oder aus der Halteeinheit entnommen, wozu kein Gasstrom benötigt wird. In dieser Ausgestaltung lässt sich die erfindungsgemäße Bodenmaschine besonders einfach in bestehende Prozesse integrieren.

In einer bevorzugten Variante weisen fünf der sechs auf dem Statorabschnitt angeordneten Unterkanäle jeweils eine Erweiterung auf. Wie eingangs erwähnt, wird der Glasbehälter dadurch auf die gewünschte Länge gebracht, dass der Boden gegen eine Bodenmatrize gedrückt wird. Hierzu ist ein besonders starker Gasstrom notwendig, um die notwendige Gegenkraft aufzubringen. Der Statorabschnitt, welcher dieser Bearbeitungsposition zugeordnet ist, weist keine Erweiterung auf, wodurch die Fläche der Spaltdichtung maximiert wird, so dass sie auch Gasströme mit hohem Volumenstrom und hohem Druck sicher abdichten kann.

Der Unterkanal des Statorabschnitts, der keine Erweiterung aufweist, weist dabei ein Schaltventil mit einer Druckmess- und Einstelleinrichtung auf. Hierdurch wird es für den Maschinenführer einfacher, den Druck und den Volumenstrom beim Drücken des Glasbehälters gegen die Bodenmaschine im Bedarfsfall schnell zu ändern, was letztlich zu einer besseren Qualität der Glasbehälter und zu weniger Ausschuss führt.

In einer weiteren Ausgestaltung ist der Rotor entlang der Drehachse überlappend zum Stator angeordnet. Dadurch, dass der Rotor den Stator entlang der Drehachse zumindest teilweise überlappt, kann die Bodenmaschine mit einer geringen radialen Ausbreitung ausgeführt werden.

Weiterhin ist es vorteilhaft, wenn der Rotorabschnitt und/oder der Statorabschnitt eine Anzahl von ringförmigen Kanalabschnitten aufweisen. Je nachdem, wo die ringförmigen Kanalabschnitte angeordnet sind, mündet ein auf dem Rotorabschnitt oder auf dem Statorabschnitt angeordneter Unterkanal in den ringförmigen Kanalabschnitt. Hierdurch wird ein Unterkanal nicht einer Bearbeitungsposition zugeordnet, wie es in der Ausgestaltung der Fall ist, in welcher der Rotor radial außerhalb des Stators angeordnet ist, sondern jeder Unterkanal ist einer Halteeinheit zugeordnet. Mittels der ringförmigen Kanalabschnitte kann der Gasstrom unabhängig von der Drehstellung des Rotors unterbrechungsfrei zur Halteeinheit geleitet werden, also auch dann, wenn sich die Halteeinheit zwischen zwei Bearbeitungspositionen befindet, was die Qualität des entstehenden Glasbehälters weiter verbessert. Insbesondere ist es möglich, den Volumenstrom des Gasstroms über sämtliche Bearbeitungspositionen hinweg optimal einzustellen und komplexe Profile zu durchlaufen.

Vorzugsweise sind die ringförmigen Kanalabschnitte im Durchführungsabschnitt in Richtung der Drehachse geöffnet, wobei Vorsprünge zum Ausbilden der Spaltdichtung in die ringförmigen Kanalabschnitte hineinragen. In dieser Ausführung lassen sich entlang der Drehachse überlappend angeordnete Rotoren und Statoren mit Spaltdichtungen versehen, so dass die Vorteile der Spaltdichtungen auch in dieser Rotor-Stator-Anordnung genutzt werden können.

Vorzugsweise weist das Kanalsystem eine Steuer- oder Regelungseinrichtung zum Steuern oder Regeln des durch das Kanalsystem strömenden Gasstroms auf. Hierdurch kann die Größe des Gasstroms so eingestellt werden, dass die gewünschte Wirkung auf den Glasbehälter reproduzierbar erzielt werden kann. Es können hierzu beispielsweise Massflow-Controller (MFC) zum Einsatz kommen, die in einen Regelkreislauf eingebunden werden können. Es besteht die Möglichkeit, nicht nur einen bestimmten Volumenstrom einzustellen, sondern ein Profil abzufahren, was insbesondere bei überlappend angeordneten Rotoren und Statoren vorteilhaft ist, da hier der Gasstrom während des gesamten mit der Bodenmaschine durchgeführte Bearbeitungsvorgangs mit einer Steuer- oder Regelungseinrichtung ohne Unterbrechung verändert werden kann. Es kann zu jeder Zeit der optimale Volumenstrom eingestellt werden, was zu qualitativ besonders hochwertigen Glasbehältern mit sehr geringer Delaminationsneigung führt.

In einer weiteren Ausführung weist das Kanalsystem eine weitere Druckquelle zum Bereitstellen eines weiteren Gasstroms auf, der mittels einer Druckmess- und Einstelleinrichtung dem ersten Gasstrom zuschaltbar ist. Wie bereits eingangs erwähnt, wird die Länge des Glasbehälters dadurch eingestellt, dass der Glasbehälter gegen eine Bodenmatrize gedrückt wird. Hierzu ist ein stärkerer Gasstrom als bei den übrigen Bearbeitungsschritten notwendig, der in dieser Ausführung dadurch bereitgestellt wird, dass der weitere Gasstrom zugeschaltet wird. Die Druckmess- und Einstelleinrichtung erleichtert es dabei dem Maschinenführer, bei Bedarf den weiteren Gasstrom zuzuschalten und dessen Stärke anzupassen.

Bevorzugt weist die Bodenmaschine acht auf dem Statorabschnitt angeordnete Unterkanäle, acht ringförmige Kanalabschnitte, acht auf dem Rotorabschnitt angeordnete Unterkanäle und acht Halteeinheiten auf. Da herkömmliche Bodenmaschinen ebenfalls acht Halteeinheiten aufweisen, ist die erfindungsgemäße Bodenmaschine, die ebenfalls acht Halteeinheiten aufweist, besonders gut in bestehende Prozesse zu integrieren.

Dabei ist es besonders vorteilhaft, wenn das Kanalsystem acht Steuer- oder Regelungseinrichtungen und acht Druckmess- und Einstelleinrichtungen aufweist. Wie bereits oben beschrieben, kann eine weitere Druckquelle zugeschaltet werden, um den Volumenstrom zu erhöhen. In dieser Ausgestaltung können alle acht Halteeinheiten mit einem erhöhten Volumenstrom beaufschlagt werden.

In einer weiteren Ausführungsform weist das Kanalsystem genau einen auf dem Stator angeordneten Unterkanal und auf dem Rotor eine Steuer- oder Regelungseinrichtung zum Steuern oder Regeln des durch das Kanalsystem strömenden Gasstroms auf. In dieser Ausführungsform wird die Verteilung des Gasstroms von einem Unterkanal auf mehrere Unterkanäle erst auf dem Rotor vorgenommen. Hieraus ergibt sich der Vorteil, dass nur ein Unterkanal im Durchführungsabschnitt vom Statorabschnitt in den Rotorabschnitt überführt werden muss, was die Abdichtung vereinfacht. In diesem Fall kann eine Schleifringdichtung zum Einsatz kommen. Weiterhin kann mit höheren Drücken gearbeitet werden, so dass ein höherer Volumenstrom vom Stator zum Rotor geführt werden kann. Ferner ist der Druckverlust geringer. Hieraus ergibt sich der Vorteil, dass die Unterkanäle einen kleineren Durchmesser im Vergleich zu den übrigen Ausführungsformen haben können, was eine kompaktere Bauweise der erfindungsgemäßen Vorrichtung in dieser Ausführungsform ermöglicht. Ein weiterer Vorteil, der sich durch die Anordnung der Regelungseinrichtung auf dem Rotor ergibt, ist der, dass die Steuerung oder Regelung des Gasstroms näher an der Stelle vorgenommen wird, an welcher der Gasstrom das Kanalsystem verlässt und in den Glasbehälter oder das Rohrglas eingeleitet wird. Druckverluste, die sich auf dem Weg von der Druckquelle durch den Durchführungsabschnitt in den Rotor einstellen, können von der Regelungseinrichtung korrigiert werden. Folglich kann der gewünschte Volumenstrom in dieser Ausführungsform genauer eingestellt werden, was wiederum zu einer Verringerung der Delaminationsneigung führt. Selbstverständlich ist es auch möglich, mehrere Unterkanäle auf dem Stator oder dem Statorabschnitt vorzusehen und die Regelungseinrichtung auf dem Rotor anzuordnen. Ferner kann genau eine Regelungseinrichtung auf dem Rotor oder dem Rotorabschnitt vorgesehen und die Verteilung des Gasstroms stromabwärts der Regelungseinrichtung angeordnet sein. Alternativ kann die Verteilung des Gasstroms auf dem Rotor vorgenommen werden und für jede Halteeinheit eine Regelungseinrichtung vorgesehen sein.

Ein weiterer Aspekt der Erfindung betrifft eine Glasbearbeitungsvorrichtung zum Herstellen von Glasbehältern aus einem Rohrglas, umfassend eine Muttermaschine und eine Bodenmaschine nach einem der vorherigen Ausführungsbeispiele. Die Vorteile und technischen Effekte, die mit der erfindungsgemäßen Glasbearbeitungsvorrichtung erzielt werden können, entsprechen denjenigen, die für die erfindungsgemäße Bodenmaschine beschrieben worden sind. Insbesondere kann ein definierter Gasstrom während der Bearbeitung des Rohrglases und insbesondere des Bodens des Glasbehälters eingestellt werden, so dass die Delaminationsneigung des Glasbehälters deutlich reduziert werden kann.

Die Aufgabe wird weiterhin durch ein Verfahren zum Herstellen von Glasbehältern aus einem Rohrglas mit einer Glasbearbeitungsmaschine, umfassend folgende Schritte:
- Halten des Rohrglases bzw. des Glasbehälters mit einer Halteeinheit und Führen des Rohrglases bzw. des Glasbehälters zu verschiedenen Bearbeitungspositionen mit einem Transportsystem, und Bearbeiten des Rohrglases bzw. des Glasbehälters an den jeweiligen Bearbeitungspositionen,
- Bereitstellen eines Gasstroms mittels einer Druckquelle,
- Führen des Gasstroms zur Halteeinheit und Einleiten des Gasstroms in das Rohrglas bzw. in den Glasbehälter mit einem mit der Druckquelle kommunizierenden Kanalsystem, wobei der Glasbehälter ein offenes Ende und einen Boden aufweist und
- das Kanalsystem ein freies Ende bildet und so ausgestaltet ist, dass der Gasstrom spaltfrei zu der Halteeinheit geführt wird, oder
- das Kanalsystem ein freies Ende bildet und der Stator und der Rotor so ausgestaltet sind, dass sie im Durchführungsabschnitt eine Spaltdichtung zum Abdichten des Kanalsystems bilden, wobei
- das Gas vom freien Ende des Kanalsystems konzentrisch zur Rotationsachse des Glasbehälters durch das offene Ende in den Glasbehälter eintritt und in Richtung des Bodens strömt, wobei sich der Gasstrom in radialer Richtung etwas öffnet und sich im Bodenbereich aufteilt, so dass er parallel zum Boden radial nach außen strömt, bis dass er den Bereich der Seitenwand erreicht, anschließend sich die Strömungsrichtung derart ändert, dass der Gasstrom parallel zur Seitenwand und zurück zum offenen Ende strömt und den Glasbehälter verlässt, wobei der Gasstrom im Glasbehälter laminar strömt.

Die Vorteile und technischen Effekte, die mit dem erfindungsgemäßen Verfahren erzielt werden können, entsprechen denjenigen, die für die erfindungsgemäße Bodenmaschine beschrieben worden sind. Insbesondere kann ein definierter Gasstrom während der Bearbeitung des Bodens des Glasbehälters eingestellt werden, so dass die Delaminationsneigung des Glasbehälters deutlich reduziert werden kann. Gleichzeitig ist es möglich, den noch heißen und damit weichen Boden für die weitere Bearbeitung mit dem Gasstrom zu unterstützen, damit er nicht durchhängt. Ferner ist es möglich, die Oberflächenalkalinität des Glasbehälters unter bestimmten Grenzwerten zu halten. An dieser Stelle soll angemerkt werden, dass die erfindungsgemäße Führung des Gasstroms die Delaminationsneigung unabhängig vom verwendeten Transportsystem, mit dem das Rohrglas bzw. der Glasbehälter von einer zur nächsten Bearbeitungsposition geführt wird, verringert. Als Transportsystem kann jedes Transportsystem eingesetzt werden, welches geeignet ist, das Rohrglas bzw. den Glasbehälter zu den Bearbeitungspositionen zu führen. Dabei kann beispielsweise ein lineares Transportsystem eingesetzt werden.

Vorzugsweise wird das Verfahren mit einer Glasbearbeitungsvorrichtung durchgeführt, welche eine Muttermaschine und eine Bodenmaschine nach einem der zuvor beschriebenen Ausführungsbeispiele aufweist, wobei das Rohrglas bzw. der Glasbehälter durch Drehen der Bodenmaschine zu verschiedenen Bearbeitungspositionen geführt wird. Diese Ausführungsform des erfindungsgemäßen Verfahrens lässt sich bei den üblicherweise eingesetzten Glasbearbeitungsvorrichtungen mit einer Muttermaschine und einer Bodenmaschine realisieren, ohne dass die grundsätzlichen Herstellungsprozesse wesentlich geändert werden müssen. Zudem können bekannte Muttermaschinen verwendet werden, so dass sich der konstruktive Mehraufwand weitgehend auf die Bodenmaschine beschränkt.

Dadurch , dass der Gasstrom so in den Glasbehälter eingeleitet wird, dass der Gasstrom im Glasbehälter laminar strömt und wieder aus dem Glasbehälter austritt, wird eine kontinuierliche Durchspülung des Glasbehälters erzeugt, so dass gasförmige Substanzen, insbesondere Alkaliborate, die durch das Erhitzen des Bodenbereichs beim Abtrennen des Glasbehälters vom übrigen Rohrglas verdampfen und in der Delaminationszone in das Glas des Glasbehälters hinein diffundieren können, gleich nach dem Verdampfungsvorgang vom Gasstrom mitgerissen und aus dem Glasbehälter hinaus transportiert werden. Hierdurch wird verhindert, dass die verdampften Substanzen wieder in das Glas hinein diffundieren und somit eine Delamination des Glases hervorrufen können. Der Gasstrom überdeckt die Delaminationszone mit einer gewissen Schutz- oder Grenzschicht.

Das erfindungsgemäße Verfahren wird dadurch weitergebildet, dass das Rohrglas bzw. der Glasbehälter beim Einleiten des Gasstroms in das Rohrglas bzw. in den Glasbehälter von der Halteeinheit relativ zu einem freien Ende des Kanalsystems gedreht wird. Durch Fertigungsungenauigkeiten oder durch Verschmutzungen oder Verschleiß im Betrieb der erfindungsgemäßen Vorrichtung kann es vorkommen, dass die Längsachse des letzten Abschnitts am freien Ende des Kanalsystems oder einer dort angebrachten Düse nicht ideal mit der Rotationsachse des Rohrglases bzw. des Glasbehälters fluchtet und/oder einen Winkel mit der Rotationsachse einschließt. Folglich wird der Gasstrom nicht ideal in das Rohrglas eingeleitet und es entsteht eine nicht rotationssymmetrische Strömung innerhalb des Rohrglases bzw. des Glasbehälters, was im ungünstigen Fall zu Toträumen oder Turbulenzen führen kann, so dass die Delaminationsneigung in einigen Bereichen nicht oder nur in einem unzureichendem Maß verringert wird. Wenn das Rohrglas bzw. der Glasbehälter beim Einleiten des Gasstroms gedreht wird, so wird der Effekt, dass der Gasstrom nicht ideal eingeleitet wird, gleichmäßig verteilt, so dass wiederum eine rotationssymmetrische Strömung im Rohrglas oder im Glasbehälter entsteht. Auf diese Weise wird auch bei nicht ideal eingeleitetem Gasstrom die Delaminationsneigung spürbar verringert.

Die Erfindung wird im Folgenden anhand von bevorzugten Ausführungsbeispielen unter Bezugnahme auf die anhängenden Zeichnungen im Detail erläutert. Es zeigen
- Figur 1a): ein erstes Ausführungsbeispiel einer erfindungsgemäßen Bodenmaschine anhand einer Draufsicht, wobei der mittlere Teil mit einer Schnittdarstellung gezeigt ist,
- Figur 1b): eine Schnittdarstellung entlang der in Figur 1a) definierten Schnittebene,
- Figur 1c): eine prinzipielle Darstellung eines erfindungsgemäßen Kanalsystems der Bodenmaschine gemäß dem ersten Ausführungsbeispiel,
- Figur 2: eine Prinzipskizze einer Glasbearbeitungsvorrichtung mit der erfindungsgemäßen Bodenmaschine nach dem ersten Ausführungsbeispiel,
- Figur 3a): ein zweites Ausführungsbeispiel einer erfindungsgemäßen Bodenmaschine anhand einer Draufsicht, wobei der mittlere Teil mit einer Schnittdarstellung gezeigt ist,
- Figur 3b): eine Schnittdarstellung entlang der in Figur 3a) definierten Schnittebene, und
- Figur 3c): eine prinzipielle Darstellung eines erfindungsgemäßen Kanalsystems der Bodenmaschine gemäß dem zweiten Ausführungsbeispiel,
- Figur 4a): einen Glasbehälter, bei dem die während der Bearbeitung stattfindenden Verdampfungs-, Eindiffusions- und Abscheidevorgänge vereinfacht dargestellt sind, und
- Figur 4b): einen Glasbehälter, der mit einer erfindungsgemäßen Bodenmaschine bearbeitet wird.

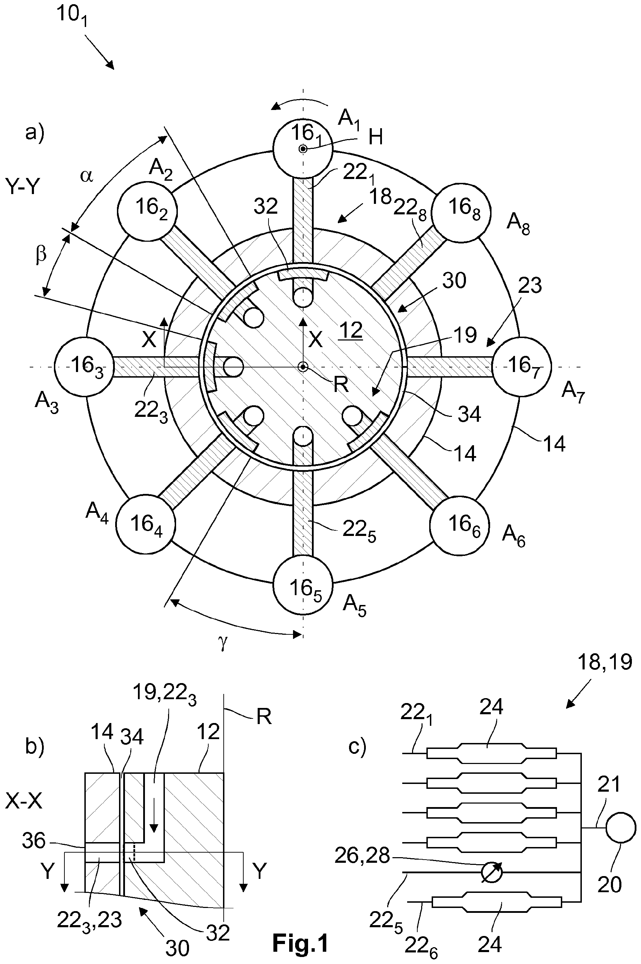

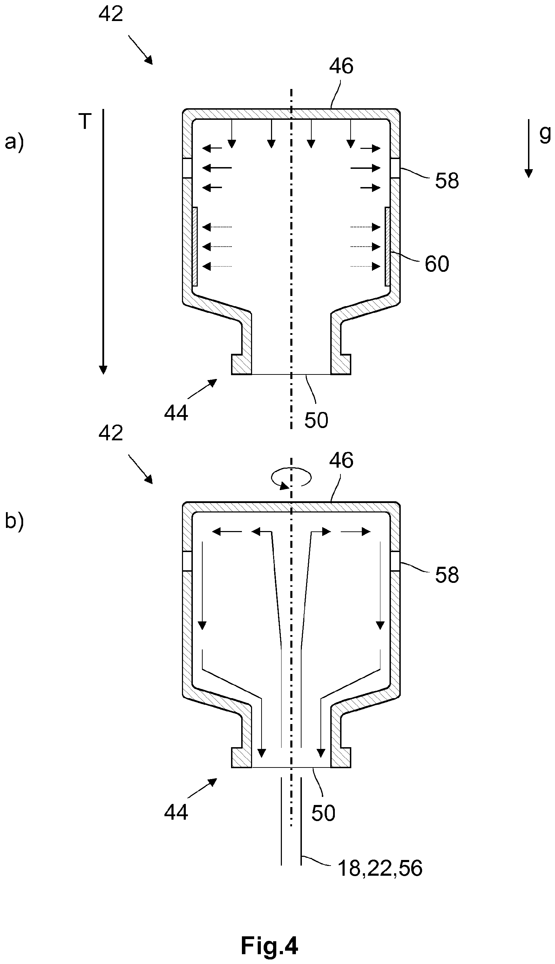

In Figur 1a) ist eine erfindungsgemäße Bodenmaschine 10₁ gemäß einem ersten Ausführungsbeispiel dargestellt. Die Bodenmaschine 10₁ weist einen Stator 12 und einen radial außerhalb des Stators 12 angeordneten Rotor 14 auf. Der Rotor 14 ist konzentrisch zum Stator 12 und mit einer nicht dargestellten Antriebseinheit um eine Drehachse R drehbar angeordnet, die im Betriebszustand der Bodenmaschine 10₁ im Wesentlichen mit der Wirkrichtung der Gewichtskraft zusammenfällt. Der Rotor 14 umfasst eine Anzahl von Halteeinheiten 16, die jeweils ein nicht näher dargestelltes Einspannfutter aufweisen, in welches ein ebenfalls nicht dargestelltes Rohrglas eingespannt werden kann. Die Halteeinheit bzw. das Einspannfutter sind um die eigene Achse H drehbar. Im dargestellten Beispiel weist der Rotor 14 acht Halteeinheiten 16₁ bis 16₈ auf. Ferner weist die Bodenmaschine 10₁ ein Kanalsystem 18 auf, mit welchem ein Gas, beispielsweise Luft, von einer Druckquelle 20 zu den Halteeinheiten 16 geführt werden kann (vgl. Figur 1c)). Grundsätzlich eignen sich alle Gase, mit denen es möglich ist, die aus dem Boden entweichenden Stoffe aus dem Glasbehälter heraus zu transportieren. Im Folgenden wird auf die sich hieraus ergebende Strömungsrichtung Bezug genommen. Das Kanalsystem 18 umfasst einen Statorabschnitt 19, der sämtliche Kanäle, Verteiler, Unterkanäle usw. umfassen soll, die den Stator durchlaufen oder auf dem Stator 12 oder stationär angeordnet sind, und einen Rotorabschnitt 23, der sämtliche Teile des Kanalsystems 18 umfasst, die den Rotor durchlaufen oder auf dem Rotor 14 oder rotierend angeordnet sind, beispielsweise eine Düse 56 (vgl. Figur 4). In Figur 1c) ist ein Teil des Statorabschnitts 19 anhand einer Prinzipskizze dargestellt, der ausgehend von der Druckquelle 20 einen Kanal 21 aufweist, der sich in insgesamt sechs Unterkanäle 22₁ bis 226 verzweigt. In fünf der sechs Unterkanälen 22 sind jeweils eine Steuer- oder Regelungseinrichtung 24 angeordnet, mit welchen der Volumenstrom des Gases, welches von der Druckquelle 20 zu den jeweiligen Halteeinheiten 16 strömt, gesteuert oder geregelt werden kann. Der Unterkanal 225 weist keine Steuer- oder Regelungseinrichtung 24 auf, sondern ein Schaltventil 26 mit einer nicht näher dargestellten Druckmess- und Einstelleinrichtung 28. Die Unterkanäle 22 führen zum Stator 12, in welchem sie sich, wie aus Figur 1b) ersichtlich, in senkrechter Richtung fortsetzen und in einer bestimmten Tiefe radial nach außen abbiegen.

Definitionsgemäß soll sich zwischen dem Rotor 14 und dem Stator 12 ein Durchführungsabschnitt 30 befinden, also dort, wo in Strömungsrichtung des Gases der Statorabschnitt 19 des Kanalsystems 18 endet und der Rotorabschnitt 23 des Kanalsystems 18 beginnt. Insbesondere aus Figur 1a) ist erkennbar, dass einige der Unterkanäle 22 des Statorabschnitts 19 im Durchführungsabschnitt 30 Erweiterungen 32 aufweisen, die sich über einen ersten Winkel α in einer Ebene senkrecht zur Drehachse R erstrecken, wobei die Drehachse R den Ursprung der Winkelschenkel des ersten Winkels α bildet. Man erkennt, dass der Unterkanal 225 keine Erweiterung aufweist. Genau dieser Unterkanal 225 weist auch keine Steuer- oder Regelungseinrichtung 24 auf, sondern das Schaltventil 26 mit der Druckmess- und Einstelleinrichtung 28.

Der Stator 12 und der Rotor 14 sind so aufgebaut, dass sie eine Spaltdichtung 34 bilden, um die jeweiligen Unterkanäle 22 des Kanalsystems 18 im Durchführungsabschnitt 30 abzudichten. Alternativ kann ein Dichtkörper zwischen dem Rotor 14 und dem Stator 12 angeordnet sein. Stromabwärts des Durchführungsbereichs 30 setzt sich der entsprechende Unterkanal 22 im Rotorabschnitt 23 des Kanalsystems 18 fort, der dann unter Ausbildung einer Austrittsöffnung 36 ins Freie gelangt, wo Rohre oder Schläuche über nicht näher dargestellte Anschlussmittel angeschlossen werden können. Wie eingangs erwähnt, sind die Halteeinheiten 16 des Rotors 14 auch entlang der Drehachse R der Bodenmaschine 10₁ axial bewegbar, so dass sich Schläuche aufgrund ihrer Flexibilität anbieten, um den Gasstrom zu den jeweiligen Halteeinheiten 16 zu leiten.

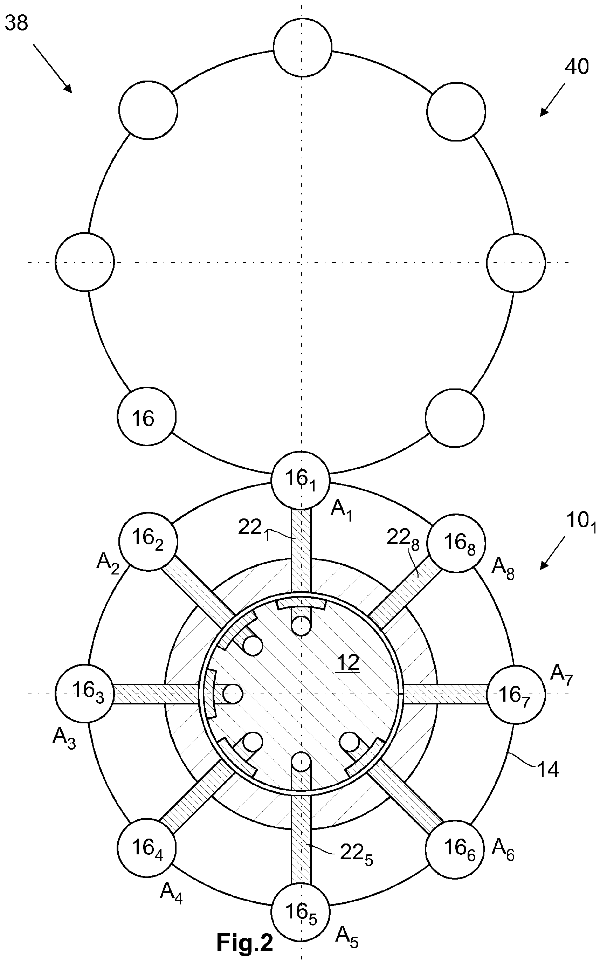

In Figur 2 ist eine Glasbearbeitungsvorrichtung 38 mit der erfindungsgemäßen Bodenmaschine 10₁ nach dem ersten Ausführungsbeispiel im Prinzip anhand einer Draufsicht dargestellt. Neben der Bodenmaschine 10₁ weist die Glasbearbeitungsvorrichtung 38 weiterhin eine Muttermaschine 40 auf. Zur Herstellung eines hier nicht dargestellten Glasbehälters 42 wird ein nicht dargestelltes Rohrglas zunächst in ein Einspannfutter der Muttermaschine 40 eingespannt. Ein offenes Ende des Rohrglases steht bezogen auf die Wirkrichtung der Schwerkraft um ein bestimmtes Maß nach unten über das Einspannfutter über und wird verschiedenen Bearbeitungsschritten unterzogen, um beispielsweise einen Rollrand 44 (vgl. Figur 4) oder ein Gewinde zu formen. Ist das offene Ende fertig geformt, wird das Rohrglas in eine Bearbeitungsposition A₁ gefahren, in welcher das Einspannfutter der Muttermaschine 40 mit dem Einspannfutter der Bodenmaschine 10₁ axial fluchten. Die Einspannfutter der Muttermaschine 40 sind üblicherweise oberhalb der Einspannfutter der Bodenmaschine 10₁ angeordnet, woher die Bodenmaschine 10₁ auch ihre Bezeichnung bekommen hat. Im ursprünglichen Zustand hat das Rohrglas eine Länge von ca. 1,5 m, so dass der nach unten überstehende Teil des Rohrglases vom restlichen Teil zum Ausbilden des Glasbehälters 42 abgetrennt werden muss. Hierzu wird das Rohrglas an der entsprechenden Stelle mit einem nicht dargestellten Gasbrenner erwärmt. Wenn die notwendige Temperatur erreicht ist, wird die Halteeinheit 16 mit dem Einspannfutter der Bodenmaschine 10₁ axial nach oben in Richtung des Einspannfutters der Muttermaschine 40 gefahren, so dass es das Rohrglas ergreifen kann. Anschließend wird das Einspannfutter wieder axial nach unten gefahren, wobei das Rohrglas an der Stelle, an der es erwärmt worden ist, unter Bildung von zwei geschlossenen Böden getrennt wird. Bereits in dieser Bearbeitungsposition wird ein Gasstrom über das Kanalsystem 18 in das Rohrglas eingeleitet. Der Volumenstrom des eingeleiteten Gases variiert mit dem Volumen des Glasbehälters. Typische Volumina für Glasbehälter liegen zwischen 2 mL und 100 mL. Der hierzu notwendige Volumenstrom des eingeleiteten Gases liegt dabei zwischen 1 bis 20 sl/min (Standardliter pro Minute). Entsprechend werden die Drücke an der Druckquelle 20 eingestellt.

Im Einspannfutter der Bodenmaschine 10₁ befindet sich nun der Glasbehälter 42, der das bereits fertig geformte offene Ende 50 sowie einen geschlossenen Boden 46 aufweist, der aber noch nicht die gewünschte Form aufweist. Um den Boden 46 wunschgemäß zu formen, wird er mit weiteren Gasbrennern zielgerichtet behandelt, wozu die Bodenmaschine 10₁ in die Bearbeitungspositionen A₂, A₃ und A₄ gefahren wird. Während der Bearbeitung durch die Gasbrenner wird ebenfalls ein Gasstrom in den nun geschlossenen Glasbehälter 42 eingeleitet. Für jede Bearbeitungsposition A₁₋₅ kann der Gasstrom einen anderen Volumenstrom aufweisen, der auch während der Zeit, für die sich der Glasbehälter 42 in einer der Bearbeitungspositionen A₁₋₄ befindet, geändert werden kann. Der Volumenstrom kann dabei konstant gehalten werden. Wenn der Glasbehälter 42 die Bearbeitungsposition A₄ durchlaufen hat, ist der Boden 46 soweit fertig bearbeitet, dass der Glasbehälter 42 nun auf die gewünschte Länge gebracht werden kann. Hierzu wird der Glasbehälter 42 in der Bearbeitungsposition A5 gegen eine nicht dargestellt Bodenmatrize gedrückt. Um die notwendige Gegenkraft aufbringen zu können, ist ein stärkerer Gasstrom mit einem höheren Volumenstrom notwendig der schätzungsweise zwischen 100 und 200 sl/min betragen kann Entsprechend ist an der Bearbeitungsposition A5 das Schaltventil 26 angeordnet, so dass der Maschinenführer im Bedarfsfall den Gasstrom schnell anpassen kann. Da ein höherer Gasstrom vorhanden ist, weist der Unterkanal 225 keine Erweiterungen 32 auf, so dass sich die Spaltdichtung 34 über einen größeren Bereich erstrecken und somit auch den Gasstrom mit dem höheren Volumenstrom und höherem Druck sicher abdichten kann. Folglich ist der zweite Winkel β, der von zwei benachbarten Erweiterungen 32 eingeschlossen wird, kleiner als der dritte Winkel γ, der vom Unterkanal 225 und den hierzu benachbarten Erweiterungen 32 eingeschlossen wird (siehe Figur 1a)). In der Bearbeitungsposition A6 wird der Glasbehälter 42 gekühlt, was aber je nach Eigenschaften des Glasbehälters 42 nicht zwingend notwendig ist. Der nun fertige und weitgehend abgekühlte Glasbehälter 42 wird in der Bearbeitungsposition A₇ aus dem Einspannfutter entnommen. In der Bearbeitungsposition A₇ ist es nicht notwendig, einen Gasstrom in den Glasbehälter 42 einzuleiten, so dass kein Unterkanal 22 der Bearbeitungsposition zugeordnet ist. In der Bearbeitungsposition A8 wird üblicherweise keine Bearbeitung vorgenommen, so dass auch hier kein Unterkanal 22 notwendig ist.

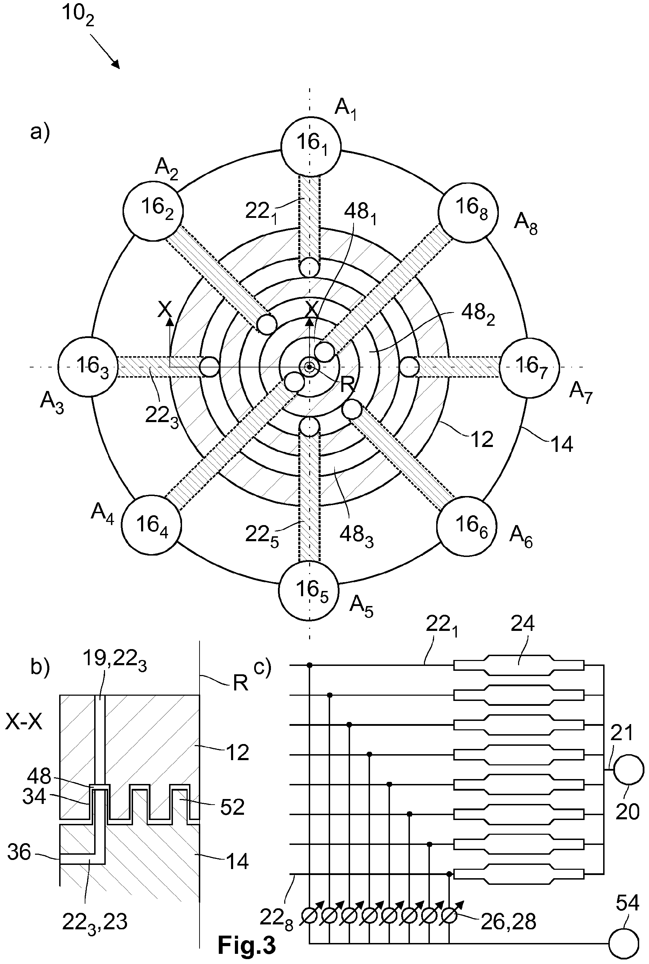

In Figur 3 ist ein zweites Ausführungsbeispiel der erfindungsgemäßen Bodenmaschine 10₂ dargestellt, wobei die Darstellungsart derjenigen entspricht, die auch für das in Figur 1 dargestellte erste Ausführungsbeispiel gewählt worden ist. Die Bodenmaschine 10₂ nach dem zweiten Ausführungsbeispiel kann genauso in die Glasbearbeitungsvorrichtung 38 integriert werden wie die Bodenmaschine 10₁ nach dem ersten Ausführungsbeispiel. Die Bearbeitung des Glasbehälters 42 verläuft im Wesentlichen gleich.

Ein wesentlicher Unterschied ist die Anordnung des Rotors 14 und des Stators 12. Im Gegensatz zum ersten Ausführungsbeispiel ist der Rotor 14 nicht radial außerhalb des Stators 12, sondern bezogen auf die Drehachse R im Betriebszustand unterhalb des Stators 12 angeordnet, so dass der Rotor 14 den Stator 12 in Richtung der Drehachse R der Bodenmaschine 10₂ überlappt. Im dargestellten Ausführungsbeispiel weisen der Stator 12 und der Rotor 14 zumindest abschnittsweise dieselbe radiale Erstreckung auf, wie aus Figur 3b) gut zu erkennen.

Der in Figur 3b) gut erkennbare Unterkanal 223, der im Statorabschnitt 19 des Kanalsystems 18 angeordnet ist, biegt in diesem Ausführungsbeispiel der Bodenmaschine 10₂ nicht radial nach außen ab, sondern durchläuft den Stator 12 ohne Richtungsänderung parallel zur Drehachse R und mündet dann in einen zu einem Ende offenen ringförmigen Kanalabschnitt 48, in welchen ein Vorsprung 52 des Rotors 14 im montierten Zustand hineinragt. Der Unterkanal 22 auf dem Rotorabschnitt 23 des Kanalsystems 18 durchläuft den Vorsprung 52. In diesem Fall umfasst der Durchführungsabschnitt 30 den ringförmigen Kanalabschnitt 48 und den Vorsprung 52, wobei der Vorsprung 52 so in den ringförmigen Kanalabschnitt 48 hineinragt, dass die Spaltdichtung 34 gebildet wird. Im Rotorabschnitt 23 setzt sich der Unterkanal 223 in Strömungsrichtung des Gasstroms zunächst axial fort und biegt dann radial nach außen ab, wo er den Rotor 14 unter Bildung der Austrittsöffnung 36 radial verlässt. Wiederum kann an der Austrittsöffnung 36 mit nicht dargestellten Anschlussmitteln ein Schlauch angeschlossen werden, um den Gasstrom zu der Halteeinheit 16₃ zu führen.

Im dargestellten Ausführungsbeispiel 10₂ sind insgesamt drei ringförmige Kanalabschnitte 48₁ bis 48₃ vorhanden, von denen eine unterschiedliche Anzahl von auf dem Rotorabschnitt 23 angeordnete Unterkanäle 22 ausgehen. Folglich sind auch drei Unterkanäle 22 auf dem Statorabschnitt 19 notwendig, die den jeweiligen ringförmigen Kanalabschnitt 48 einen bestimmten Gasstrom aufprägen, der mittels der Steuer- oder Regelungseinrichtung 24 verändert werden kann. In diejenigen Unterkanälen 22 auf dem Rotorabschnitt 23, die vom selben ringförmigen Kanalabschnitt 48 ausgehen, wird daher unabhängig von der Drehstellung des Rotors 14 derselbe Gasstrom eingeleitet. In dieser Ausgestaltung hat der ringförmige Kanalabschnitt 48 auch eine Verteilerfunktion.

Die in Figur 3a) gezeigte Ausgestaltung ist aber hauptsächlich aus Darstellungsgründen gewählt worden. Beispielsweise die Halteeinheit 16₁ und 16₃ hängen am selben ringförmigen Kanalabschnitt 48₃. Folglich kann die Einleitung des Gasstroms in das Rohrglas oder den Glasbehälter an der Bearbeitungsposition A₁ nicht unabhängig von der Einleitung an der Bearbeitungsposition A₃ verändert werden. Bevorzugt ist es daher, acht ringförmige Kanalabschnitte 48 vorzusehen, in die jeweils ein Unterkanal 22 auf dem Rotorabschnitt 23 hineinragt. Folglich sind in diesem Fall auch acht Unterkanäle 22 auf dem Statorabschnitt 19 vorhanden, wie in Figur 3c) dargestellt. So kann der Gasstrom unabhängig davon, in welcher Bearbeitungsposition A₁ bis A8 sich das Rohrglas bzw. der Glasbehälter 42 befindet, optimal und unabhängig voneinander eingestellt werden, wobei sich die Volumenströme auch hier in den zuvor genannten Bereichen bewegen. Wie bereits oben erwähnt, wird der Glasbehälter 42 in der Bearbeitungsposition A5 auf die gewünschte Länge gebracht, wozu ein verstärkter Gasstrom notwendig ist. In diesem Ausführungsbeispiel der Bodenmaschine 10₂ wird eine weitere Druckquelle 54 mittels je einer Druckmess- und Einstelleinrichtung 28 jeweils einem der acht Unterkanäle 22₁ bis 22₈ auf dem Statorabschnitt 19 zugeschaltet, solange sich der Glasbehälter 42 in der Bearbeitungsposition befindet.

In beiden Ausführungsformen der erfindungsgemäßen Bodenmaschine 10₁, 10₂ sind die Steuer- oder Regelungseinrichtung 24 im Statorabschnitt 19 angeordnet. Es ist aber auch möglich, die Steuer- oder Regelungseinrichtung 24, die beispielsweise als Massflow-Controller ausgestaltet sein können, auf dem Rotorabschnitt 23 anzuordnen. Eine Ansteuerung der Massflow-Controller kann beispielsweise über eine Funkstrecke erfolgen, so dass keine Drehdurchführungen für Kabel notwendig ist.

In Figur 4a) ist ein Glasbehälter 42 dargestellt, mit dem die erfindungswesentlichen Vorgänge während des Herstellungsprozesses näher erläutert werden sollen. Der Glasbehälter 42 ist so dargestellt, wie er im Einspannfutter der Bodenmaschine 10 ausgerichtet ist. Man erkennt das nach unten gerichtete offene Ende 50 des Glasbehälters 42, das den Rollrand 44 aufweist, auf dem beispielsweise ein Verschluss aufgebracht werden kann. Wie mehrfach erwähnt, wird der Glasbehälter 42 durch einen thermischen Trennprozess vom übrigen Rohrglas getrennt, weshalb der Glasbehälter 42 am Boden 46 die höchste Temperatur aufweist. Die Temperatur T nimmt zum offenen Ende 50 ab, wie es durch den Pfeil angedeutet ist. Wie ebenfalls erwähnt, muss der Boden 46 nach dem Trennprozess weiteren thermischen Bearbeitungsvorgängen unterzogen werden, um ihn in die gewünschte Form zu bringen. Folglich wird der Boden 46 immer wieder erwärmt, so dass er über mehrere Bearbeitungsschritte hinweg die höchste Temperatur innerhalb des Glasbehälters 42 aufweist. Die Temperaturen liegen über den Verdampfungstemperaturen von einigen Bestandteilen des verwendeten Glas, so dass insbesondere Natrium aus dem Bodenbereich verdampft, wobei Natrium noch Bor in Form von Boraten mitschleppt, so dass auch Bor aus dem Glas verdampft. Gleichzeitig diffundiert auch eine bestimmte Menge von Natrium und Bor wieder zurück in den Bodenbereich, wobei der Grad der Eindiffusion eine andere Temperaturabhängigkeit aufweist als der Grad der Verdampfung. Die Pfeile in der Figur 4a) deuten dabei an, welcher der beiden Prozesse überwiegt. In Bodennähe überwiegt die Verdampfung, wohingegen mit sinkender Temperatur die Eindiffusion immer stärker wird und in einer Delaminationszone 58 ein Maximum erreicht. Sinkt die Temperatur des Glasbehälters 42 weiter ab, so wird aber auch der Eindiffusionsprozess immer schwächer, da es immer schwerer für Natrium und Bor wird, in die Glasmatrix einzudringen. Unterhalb einer bestimmten Temperatur kann weder Natrium noch Bor in die Glasmatrix eindringen und es bildet sich ein Niederschlag 60 auf der Glasoberfläche.

Für die Delaminationsneigung ist jedoch die Eindiffusion der entscheidende Prozess, der in einem bestimmten Abstand unterhalb des Bodenbereichs in der Delaminationszone 58 ein Maximum erreicht.

In Figur 4b) ist dargestellt, wie der Gasstrom erfindungsgemäß den Glasbehälter 42 durchströmt. Von einem freien Ende 56 des Kanalsystems 18, welches als eine Düse 56 ausgestaltet sein kann und das stromabwärtige Ende des Kanalsystems 18 darstellt, tritt das Gas konzentrisch zur Rotationsachse des Glasbehälters 42 durch das offene Ende 50 in den Glasbehälter 42 ein und strömt in Richtung des Bodens 46. Dabei öffnet sich der Gasstrom in radialer Richtung etwas und teilt sich im Bodenbereich auf, so dass er parallel zum Boden 46 radial nach außen strömt, bis dass er den Bereich der Seitenwand erreicht. Anschließend ändert sich die Strömungsrichtung derart, dass der Gasstrom parallel zur Seitenwand und zurück zum offenen Ende 50 strömt und den Glasbehälter 42 verlässt. Diese Strömung kann auch als koaxiale Strömung bezeichnet werden. Die so eingestellte Strömung des Gasstroms sorgt dafür, dass die Substanzen, die aus dem Bodenbereich verdampfen, insbesondere Natrium und Bor, aus dem Glasbehälter 42 abgeführt werden und nicht oder in nur sehr geringem Maße wieder zurück in das Glas eindiffundieren können. Die Delaminationszone 58 wird mit einer Grenzschicht des Gasstroms überzogen und die Konzentration von Natrium und Bor im Glasbehälter 42 in einem Maße verringert, dass die noch stattfindende Eindiffusion zu keiner spürbaren Delaminationsneigung führt. Die Verarmung des Bodens 46 bezüglich Natrium und Bor wirkt sich nicht negativ aus. Die Ausbildung der hier beschriebenen Strömung im Glasbehälter 42 setzt das Vorhandensein des Bodens 42 voraus. Es kann aber dennoch vorteilhaft sein, bereits vor Ausbildung des Bodens den Gasstrom in das noch offene Rohrglas einzuleiten, um die dann eventuell im Rohrglas vorhandenen Alkaliborate zu entfernen. Auch muss der Boden 42 nicht zwangsläufig komplett geschlossen sein. Kleine Öffnungen, wie sie bei Spritzen vorhanden sind, stören die Ausbildung der hier beschriebenen Strömung nicht oder nur in zu vernachlässigendem Umfang, wenn die Öffnung eine bestimmte Größe nicht überschreitet. Die in Figur 4b) dargestellten Verhältnisse stellen den Idealfall dar. Da aber die Düse 56 in der Praxis den Gasstrom nie genau konzentrisch mit der Rotationsachse des Glasbehälters 42 einleiten kann, wird sich eine nicht rotationssymmetrische und nicht koaxiale Strömung einstellen, wodurch sich im ungünstigsten Fall keine schützende Strömung über die Delaminationszone 58 legt. Dieser negative Effekt kann durch Drehen des Glasbehälters 42 um seine Rotationsachse deutlich minimiert werden, wobei das freie Ende oder die Düse 56 des Kanalsystems 18 fest stehen bleiben.

Der Außendurchmesser der Düse 56 muss gegenüber dem Innendurchmesser des offenen Endes 50 so klein sein, dass die eingeblasene Luft in einer koaxialen Strömung leicht wieder herausströmen kann, ohne dass ein Stau entsteht. Da das eingeleitete Gas den zylindrischen Abschnitt des Glasbehälters mit einer bestimmten Strömungsgeschwindigkeit überstreichen muss, ist der Volumenstrom proportional zum Durchmesser des Glasbehälters. Wenn zum Einstellen der Länge der Boden gegen die Matrize gedrückt wird, ist der für die Delamination verantwortliche Prozess bereits abgeschlossen, so dass dann keine koaxiale Strömung mehr erforderlich ist.

Wie eingangs erwähnt, ist es bekannt, Gasströme während des Herstellungsprozesses in den Glasbehälter 42 einzuleiten. Aufgrund der Spalte, die bekannte Bodenmaschinen innerhalb des Kanalsystems aufweisen, ist es aber nicht möglich, eine Strömung, wie sie in Figur 4b) dargestellt ist, im Glasbehälter 42 einzustellen. Insbesondere ist es nicht möglich, eine kontinuierlich gleichbleibende Strömung einzustellen. Vielmehr wird eine turbulente Strömung erzeugt, die zu Staudrücken, Verwirbelungen und Toträumen führt, wodurch das verdampfte Natrium und Bor nicht aus dem Glasbehälter 42 entfernt werden können.

### Bezugszeichenliste

- 10, 10₁, 10₂: Bodenmaschine
- 12: Stator
- 14: Rotor
- 16, 16₁ - 16₈: Halteeinheit
- 18: Kanalsystem
- 19: Statorabschnitt

- 20: Druckquelle
- 21: Kanal
- 22, 22₁ - 22₈: Unterkanal
- 23: Rotorabschnitt
- 24: Steuer- oder Regelungseinrichtung
- 26: Schaltventil
- 28: Druckmess- und Einstelleinrichtung

- 30: Durchführungsabschnitt
- 32: Erweiterung
- 34: Spaltdichtung
- 36: Austrittsöffnung
- 38: Glasbearbeitungsvorrichtung

- 40: Muttermaschine
- 42: Glasbehälter
- 44: Rollrand
- 46: Boden
- 48: ringförmiger Kanalabschnitt

- 50: offenes Ende
- 52: Vorsprung
- 54: weitere Druckquelle
- 56: freies Ende, Düse
- 58: Delaminationszone
- 60: Niederschlag

- A, A₁ -A₈: Bearbeitungsposition
- H: Drehachse Halteeinheit
- R: Drehachse Rotor
- T: Temperatur

- α: erster Winkel
- β: zweiter Winkel
- γ: dritter Winkel

## Patentansprüche

1. Bodenmaschine (10) für eine Glasbearbeitungsvorrichtung (38) zum Herstellen von Glasbehältern (42) aus einem Rohrglas, umfassend
- einen Rotor (14) und einen Stator (12),
- mehrere auf dem Rotor (14) angeordnete Halteeinheiten (16) zum Halten des Glasbehälters (42) bzw. des Rohrglases, wobei die Halteeinheiten (16) um die eigene Achse (H) und um eine Drehachse (R) der Bodenmaschine (10) drehbar gelagert sind, um den Glasbehälter (42) bzw. das Rohrglas zu verschiedenen Bearbeitungspositionen (A) zu führen,
- eine Druckquelle (20) zum Bereitstellen eines Gasstroms,
- ein mit der Druckquelle (20) kommunizierendes Kanalsystem (18) zum Führen des Gasstroms zu den Halteeinheiten (16) und zum Einleiten des Gasstroms in das Rohrglas bzw. in den Glasbehälter (42), wobei das Kanalsystem (18) eine erste Anzahl von auf einem Rotorabschnitt (23) angeordneten Unterkanälen (22) und eine zweite Anzahl von auf einem Statorabschnitt (19) angeordneten Unterkanälen (22) sowie einen Durchführungsabschnitt (30) zum Führen des Gasstroms vom Statorabschnitt (19) zum Rotorabschnitt (23) aufweist, wobei
- der Stator (12) und der Rotor (14) so ausgestaltet sind, dass sie im Durchführungsabschnitt (30) eine Spaltdichtung (34) zum Abdichten des Kanalsystems (18) bilden, oder
- das Kanalsystem (18) spaltfrei ausgestaltet ist,
**dadurch gekennzeichnet, dass** das Kanalsystem (18) ein freies Ende (56) aufweist und die Halteeinheit (16) relativ zum freien Ende (56) drehbar ist.

2. Bodenmaschine nach Anspruch 1,
**dadurch gekennzeichnet, dass** der Rotor (14) radial außerhalb des Stators (12) angeordnet ist.

3. Bodenmaschine nach einem der Ansprüche 1 oder 2,
**dadurch gekennzeichnet, dass** einer oder mehrere der Unterkanäle (22) im Durchführungsabschnitt (30) eine in einer Ebene senkrecht zur Drehachse (R) verlaufende Erweiterung (32) aufweisen.

4. Bodenmaschine nach Anspruch 1,
**dadurch gekennzeichnet, dass** der Rotor (14) entlang der Drehachse (R) überlappend zum Stator (12) angeordnet ist.

5. Bodenmaschine nach Anspruch 4,
**dadurch gekennzeichnet, dass** der Rotorabschnitt (23) und/oder der Statorabschnitt (19) eine Anzahl von ringförmigen Kanalabschnitten (48) aufweisen.

6. Bodenmaschine nach Anspruch 5,
**dadurch gekennzeichnet, dass** die ringförmigen Kanalabschnitte (48) im Durchführungsabschnitt (30) in Richtung der Drehachse (R) geöffnet sind und Vorsprünge (52) zum Ausbilden der Spaltdichtung (34) in die ringförmigen Kanalabschnitte (48) hineinragen.

7. Bodenmaschine nach Anspruch 1,
**dadurch gekennzeichnet, dass** das Kanalsystem (18) genau einen auf dem Stator (19) angeordneten Unterkanal (22) und auf dem Rotor (14) eine Steuer- oder Regelungseinrichtung (24) zum Steuern oder Regeln des durch das Kanalsystem (18) strömenden Gasstroms aufweist.

8. Glasbearbeitungsvorrichtung (38) zum Herstellen von Glasbehältern (42) aus einem Rohrglas, umfassend
eine Muttermaschine (40) und
eine Bodenmaschine (10) nach einem der vorherigen Ansprüche.

9. Verfahren zum Herstellen von Glasbehältern (42) aus einem Rohrglas mit einer Glasbearbeitungsvorrichtung (38), umfassend folgende Schritte:
- Halten des Rohrglases bzw. des Glasbehälters (42) mit einer Halteeinheit (16) und Führen des Rohrglases bzw. des Glasbehälters (42) zu verschiedenen Bearbeitungspositionen (A) mit einem Transportsystem und Bearbeiten des Rohrglases bzw. des Glasbehälters (42) an den jeweiligen Bearbeitungspositionen (A),
- Bereitstellen eines Gasstroms mittels einer Druckquelle (20),
- Führen des Gasstroms zur Halteeinheit und Einleiten des Gasstroms in das Rohrglas bzw. in den Glasbehälter (42) mit einem mit der Druckquelle (20) kommunizierenden Kanalsystem (18), wobei
- der Glasbehälter (42) ein offenes Ende (50) und einen Boden (46) aufweist und
- das Kanalsystem (18) ein freies Ende (56) bildet und so ausgestaltet ist, dass der Gasstrom spaltfrei zu der Halteeinheit (18) geführt wird, oder
- das Kanalsystem (18) ein freies Ende (56) bildet und der Stator (12) und der Rotor (14) so ausgestaltet sind, dass sie im Durchführungsabschnitt (30) eine Spaltdichtung (34) zum Abdichten des Kanalsystems (18) bilden, wobei
- das Gas vom freien Ende (56) des Kanalsystems (18) konzentrisch zur Rotationsachse des Glasbehälters (42) durch das offene Ende (50) in den Glasbehälter (42) eintritt und in Richtung des Bodens (46) strömt, wobei sich der Gasstrom in radialer Richtung etwas öffnet und sich im Bodenbereich aufteilt, so dass er parallel zum Boden (46) radial nach außen strömt, bis dass er den Bereich der Seitenwand erreicht, anschließend sich die Strömungsrichtung derart ändert, dass der Gasstrom parallel zur Seitenwand und zurück zum offenen Ende (50) strömt und den Glasbehälter (42) verlässt, wobei der Gasstrom im Glasbehälter (42) laminar strömt.

10. Verfahren nach Anspruch 9, wobei die Glasbearbeitungsvorrichtung (38) eine Muttermaschine (40) und eine Bodenmaschine (10) nach einem der Ansprüche 1 bis 9 aufweist, umfassend folgende Schritte:
- Führen des Rohrglases bzw. des Glasbehälters (42) zu verschiedenen Bearbeitungspositionen (A) durch Drehen der Bodenmaschine (10).

11. Verfahren nach einem der Ansprüche 9 oder 10, **dadurch gekennzeichnet, dass** das Rohrglas bzw. der Glasbehälter (42) beim Einleiten des Gasstroms in das Rohrglas bzw. in den Glasbehälter (42) von der Halteeinheit (16) relativ zum freien Ende (56) des Kanalsystems (18) gedreht wird.

## Claims

1. Floor-standing machine (10) for a glass processing device (38) for producing glass containers from a glass tube, comprising:
- a rotor (14) and a stator (12),
- a plurality of holding units (16) arranged on the rotor (14) for holding the glass container (42) or the glass tube, wherein the holding units (16) are mounted rotatably about their own axis (H) and around an axis of rotation (R) of the floor-standing machine (10) in order to guide the glass container (42) or the glass tube to various processing positions (A),
- a pressure source (20) for providing a gas flow,
- a duct system (18) communicating with the pressure source (20) for guiding the gas flow to the holding units (16) and for introducing the gas flow into the glass tube or into the glass container (42), wherein the duct system (18) has a first number of sub-ducts (22) arranged on a rotor section (23) and a second number of sub-ducts (22) arranged on a stator section (19), and a feedthrough section (30) for guiding the gas flow from the stator section (19) to the rotor section (23), wherein
- the stator (12) and the rotor (14) are configured so that they form a gap seal (34) in the feedthrough section (30) for sealing the duct system (18), or
- the duct system (18) is free of gaps,
**characterised in that** the duct system (18) has a free end (56) and the holding unit (16) is rotatable relative to the free end (56) .

2. Floor-standing machine according to claim 1, **characterised in that** the rotor (14) is arranged radially outside the stator (12).

3. Floor-standing machine according to one of claims 1 or 2, **characterised in that** one or more of the sub-ducts (22) have an extension (32) extending in a plane perpendicular to the axis of rotation (R) of the floor-standing machine in the feedthrough section (30).

4. Floor-standing machine according to claim 1, **characterised in that** the rotor (14) is arranged along the axis of rotation (R) so as to overlap the stator (12).

5. Floor-standing machine according to claim 4, **characterised in that** the rotor section (23) and/or the stator section (19) have a number of annular duct segments (48).

6. Floor-standing machine according to claim 5, **characterised in that** the annular duct segments (48) in the feedthrough section (30) are open in the direction of the axis of rotation (R) and projections (52) to form the gap seal (34) protrude into the annular duct segments (48).

7. Floor-standing machine according to claim 1, **characterised in that** duct system (18) has precisely one sub-duct (22) arranged on the stator (19) and has on the rotor (14) a control or regulating device (24) for controlling or regulating the gas flow through the duct system (18).

8. Glass processing device (38) for producing glass containers (42) from a glass tube, comprising a parent machine (40) and a floor-standing machine (10) according to one of the preceding claims.

9. Method for producing glass containers from a glass tube with a glass processing device (38), comprising the following steps:
- holding the glass tube or glass container (42) with a holding unit (16) and guiding the glass tube or the glass container (42) to various processing positions (A) with a transport system, and processing the glass tube or the glass container (42) at the respective processing positions (A),
- providing a gas flow by means of a pressure source (20),
- guiding the gas flow to the holding unit and feeding the gas flow into the glass tube or into the glass container (42) by a duct system (18) communicating with the pressure source (20), wherein
- the glass container (42) has an open end (50) and a base (46) and
- the duct system (18) forms a free end (56) and is configured so that the gas flow is guided in a gap-free manner to the holding unit (18), or
- the duct system (18) has a free end (56) and the stator (12) and the rotor (14) are configured so that they form a gap seal (34) in the feedthrough section (30) for sealing the duct system (18), wherein
- the gas from the free end (56) of the duct system (18) enters the glass container (42) through the open end (50) concentrically with the axis of rotation of the glass container (42) and flows towards the base (46), wherein the gas flow opens somewhat in the radial direction and is distributed in the base region, so that it flows radially outwards parallel to the base (46) until it reaches the region of the side wall, then the flow direction changes in such a way that the gas flows parallel to the side wall and back to the open end (50) and leaves the glass container (42), wherein the gas flow in the glass container (42) flows in a laminar manner.

10. Method according to claim 9, wherein the glass processing device (38) has a parent machine (40) and a floor-standing machine (10) according to one of claims 1 to 9, comprising the following steps:
- guiding of the glass tube or the glass container (42) to different machining positions (A) by rotation of the floor-standing machine (10).

11. Method according to one of claims 9 or 10, **characterised in that** during the introduction of the gas flow into the glass tube or the glass container (42) the glass tube or the glass container (42) is rotated by the holding unit (16) relative to the free end (56) of the duct system (18).

## Revendications

1. Machine reposant sur le sol (10) destinée à un dispositif de traitement de verre (38) permettant la fabrication de récipients en verre (42), à partir d'un verre brut comprenant :
- un rotor (14) et un stator (12),
- un ensemble d'unités de maintien (16) montées sur le rotor (14) pour maintenir le récipient en verre (42) ou le verre brut, les unités de maintien (16) étant montées mobiles en rotation autour de leur axe propre (H) et autour de l'axe de rotation (R) de la machine reposant sur le sol (10) pour permettre de transporter les récipients en verre (42) ou le verre brut vers différentes positions de traitement (A),
- une source de pression (20) permettant de fournir un flux de gaz,
- un système de canaux (18) communiquant avec la source de pression (20) pour permettre de guider le flux de gaz vers les unités de maintien (16) et de l'introduire dans le verre brut ou dans les récipients en verre (42), le système de canaux (18) comprenant un premier ensemble de sous canaux (22) montés sur un segment (23) du rotor et un second ensemble de sous canaux (22) montés sur un segment (19) du stator ainsi qu'un segment de passage (30) permettant de faire passer le flux de gaz du segment de stator (19) vers le segment de rotor (23),
- le stator (12) et le rotor (14) étant réalisés de sorte qu'ils forment, dans le segment de passage (30) une garniture d'étanchéité (34) permettant d'assurer l'étanchéité du système de canaux (18), ou
- le système de canaux (18) est réalisé sans intervalle,
**caractérisée en ce que**
le système de canaux (18) comporte une extrémité libre (56) et l'unité de maintien (16) est mobile en rotation par rapport à l'extrémité libre (56) .

2. Machine reposant sur le sol conforme à la revendication 1,
**caractérisée en ce que**
le rotor (14) est monté radialement à l'extérieur du stator (12) .

3. Machine reposant sur le sol conforme à la revendication 1 ou 2,
**caractérisée en ce qu'**
au moins l'un des sous canaux (22) comporte, dans le segment de passage (30) un élargissement (32) s'étendant dans un plan perpendiculaire à l'axe de rotation (R).

4. Machine reposant sur le sol conforme à la revendication 1,
**caractérisée en ce que**
le rotor (14) est monté en chevauchant le stator (12) le long de l'axe de rotation (R).

5. Machine reposant sur le sol conforme à la revendication 4,
**caractérisée en ce que**
le segment de rotor (23) et/ou le segment de stator (19) comporte (nt) un ensemble de segments de canal annulaires (48).

6. Machine reposant sur le sol conforme à la revendication 5,
**caractérisée en ce que**
les segments de canal annulaires (48) sont ouverts en direction de l'axe de rotation (R) dans le segment de passage (30), et des prolongements (52) permettant de former la garniture d'étanchéité (34) pénètrent dans les segments de canal annulaires (48).

7. Machine reposant sur le sol conforme à la revendication 1,
**caractérisée en ce que**
le système de canaux (18) comporte un seul sous canal (22) monté sur le stator (19), et, sur le rotor (14) un dispositif de commande ou de régulation (24) permettant de commander ou de réguler le flux de gaz circulant au travers du système de canaux (18) .

8. Dispositif de traitement de verre (38) permettant de fabriquer des récipients en verre (42) à partir d'un verre brut comprenant :
une machine mère (40), et
une machine reposant sur le sol (10) conforme à l'une des revendications précédentes.

9. Procédé de fabrication de récipients en verre (42) à partir d'un verre brut avec un dispositif de traitement de verre (38) comprenant les étapes suivantes consistant à :
- maintenir le verre brut ou le récipient en verre (42) avec une unité de maintien (16) guider le verre brut ou le récipient en verre (42) vers différentes positions de traitement (A) avec un système de transport et traiter le verre brut ou le récipient en verre (42) dans les positions de traitement (A) respectives,
- fournir un flux de gaz au moyen d'une source de pression (20),
- transférer le flux de gaz vers l'unité de maintien et l'introduire dans le verre brut ou dans le récipient en verre (42) avec un système de canaux (18) communiquant avec la source de pression (20),
- le récipient en verre (42) ayant une extrémité ouverte (50) et un fond (46), et
- le système de canaux (18) formant une extrémité libre (56) et étant réalisé de sorte que le flux de gaz soit guidé sans intervalle vers l'unité de maintien (18), ou
- le système de canaux (18) formant une extrémité libre (56) et le stator (12) et le rotor (14) étant réalisés de sorte qu'ils forment dans le segment de passage (30) une garniture d'étanchéité (34) permettant d'assurer l'étanchéité du système de canaux (18),
- le gaz pénétrant dans le récipient en verre (42) à partir de l'extrémité libre (56) du système de canaux (18) concentriquement à l'axe de rotation de ce récipient en verre (42) par l'extrémité ouverte (50) et circulant en direction du fond (46), le flux de gaz s'ouvrant un peu en direction radiale et se répartissant dans la zone du fond, de sorte qu'il circule radialement vers l'extérieur parallèlement au fond (46) jusqu'à ce qu'il atteigne la zone de la paroi latérale, puis, la direction de circulation se modifiant de sorte que le flux de gaz circule parallèlement à la paroi latérale et en retour vers l'extrémité ouverte (50) et s'échappe du récipient en verre (42), le flux de gaz circulant selon un flux laminaire dans le récipient en verre (42).

10. Procédé conforme à la revendication 9,
selon lequel le dispositif de traitement du verre (38) comporte une machine mère (40) et une machine reposant sur le sol (10) conforme à l'une des revendications 1 à 9, comprenant l'étape suivante
consistant à :
- transférer le verre brut ou le récipient en verre (42) vers différentes positions de traitement (A) par rotation de la machine reposant sur le sol (10).

11. Procédé conforme à l'une des revendications 9 et 10,
**caractérisé en ce que**
lors de l'introduction du flux de gaz dans le verre brut ou dans le récipient en verre (42), le verre brut ou le récipient en verre (42) est déplacé en rotation par l'unité de maintien (16) par rapport à l'extrémité libre (56) du système de canaux (18).
